# EUROPÄISCHE PATENTSCHRIFT

(11) **EP 3 452 360 B1**
(45) Veröffentlichungstag und Bekanntmachung des Hinweises auf die Patenterteilung: **07.04.2021**
(21) Anmeldenummer: 17723261.8
(22) Anmeldetag: 11.05.2017
(51) Int. Cl.: G05G 1/04, G05G 1/08, G05G 5/05, G05G 5/03

(54) **ANORDNUNG ZUM STEUERN EINER ARBEITSMASCHINE**
SYSTEM FOR CONTROLLING A WORK MACHINE
SYSTÈME DE COMMANDE D'UN ENGIN DE TRAVAIL

(30) Priorität: 13.05.2016 DE 102016005984; 20.12.2016 DE 102016015155
(43) Veröffentlichungstag der Anmeldung: 13.03.2019
(73) Patentinhaber: Liebherr-Werk Bischofshofen GmbH, 5500 Bischofshofen (AT)
(72) Erfinder: HETTEGGER, Mario, 5611 Grossarl (AT); BÖS, Manuel, 5400 Hallein (AT); KNAPP, Hans, 5500 Bischofshofen (AT); KIEGERL, Christoph, 5453 Werfenweng (AT)
(74) Vertreter: Herrmann, Uwe
(86) Internationale Anmeldenummer: PCT/EP2017/000579
(87) Internationale Veröffentlichungsnummer: WO 2017/194192

(56) Entgegenhaltungen:
- EP-A2- 0 145 684
- JP-B1- 3 065 603
- US-A- 4 477 043
- US-A- 4 696 445
- US-A1- 2010 302 017
- US-B1- 6 641 085

## Beschreibung

Die vorliegende Erfindung betrifft eine Arbeitsmaschine, insbesondere Radlader, mit wenigstens einer Anordnung zum Steuern der Arbeitsmaschine mit wenigstens einem Handsteuergerät, das insbesondere als Joystick oder Lenkrad ausgeführt ist, mit wenigstens einer Rückstellungseinrichtung in Form eines oder mehrerer Federpakete, die mit dem Handsteuergerät derart in Verbindung stehen, dass durch das Federpaket eine Rückstellkraft auf das Handsteuergerät ausgeübt wird, wenn sich das Federpaket nicht in seiner Mittelstellung befindet.

Aus dem Stand der Technik ist es bekannt, für die Steuerbarkeit von Antrieben von Lenkungen oder Arbeitsausrüstungen, wie z.B. Schaufeln etc. eine für die Nutzer spürbare Rückmeldung auf das Handsteuergerät zu geben, wenn die manuelle Bedienvorgabe und die Reaktionen an den Aktuatoren, wie beispielsweise an den Hydraulikzylindern voneinander abweichen bzw. nicht übereinstimmen. Die kann beispielsweise eintreten, wenn die Schaufel einer Arbeitsmaschine im Materialhaufwerk durch zu große äußere Lasten zu stocken beginnt und der Bedienhebelvorgabe nicht mehr folgen kann. In diesem Fall kann für die Steuerung der Arbeitsausrüstung die Rückstellkraft am Bedienhebel erhöht werden. Damit wird dem Nutzer verdeutlicht, dass eine Überlastsituation vorliegt, d.h. die Schaufel nicht mehr der Auslenkung des Bedienhebels zu folgen vermag.

Dieser Fall ist selbstverständlich nicht auf die Betätigung von Arbeitswerkzeugen beschränkt, sondern kann beispielsweise auch bei einer Lenkung auftreten. Auch hier ist es denkbar, die Rückstellkraft auf ein Handsteuergerät, wie beispielsweise auf ein Lenkrad oder auf einen Joystick zu erhöhen oder die Bewegung ganz zu unterbinden, wenn die Lenkung der Arbeitsmaschine nicht mehr der Auslenkung, Drehung etc. des Handsteuergerätes folgen kann.

Die DE 11 2014 000 302 T5 beschreibt einen Aufbau für eine Kraftrückmeldung, bei der ein elektrischer Antrieb die bekannte Federmechanik ersetzt, was insbesondere für Lenkungen von Radladern und Gradern von Nutzen sein kann. Dieses Konzept stellt höchste Ansprüche an die Steuerungssicherheit, da ausgeschlossen werden muss, dass der elektrische Antrieb durch einen Steuerungsfehler eine ungewollte Hebelauslenkung herbeiführt, die ihrerseits eine ungewollte Lenkbewegung zur Folge haben könnte, was zu einer Gefahrensituation führen kann. Aus der US 8,066,567 B2 ist eine Bremseinrichtung für einen Bedienhebel insbesondere mit einer Magnetpulverbremse bekannt. Dieses Prinzip ist aus dem Großtraktorenbereich im Anwendungsbereich elektrischer Lenkräder und "Steer-by-Wire"-Lenkungen bekannt. Aufgrund der fehlenden Elastizität im Aufbau entsteht bei diesem Konzept die Gefahr von "Stick-Slip"-Effekten beim Schließen und Öffnen der Bremse, was sich durch ruckelnde und ungleichförmige Bewegungen am Handsteuergerät äußert und in weiterer Folge nicht gewollte und nicht brauchbare Effekte auf das Steuerungsverhalten der Antriebe ausübt.

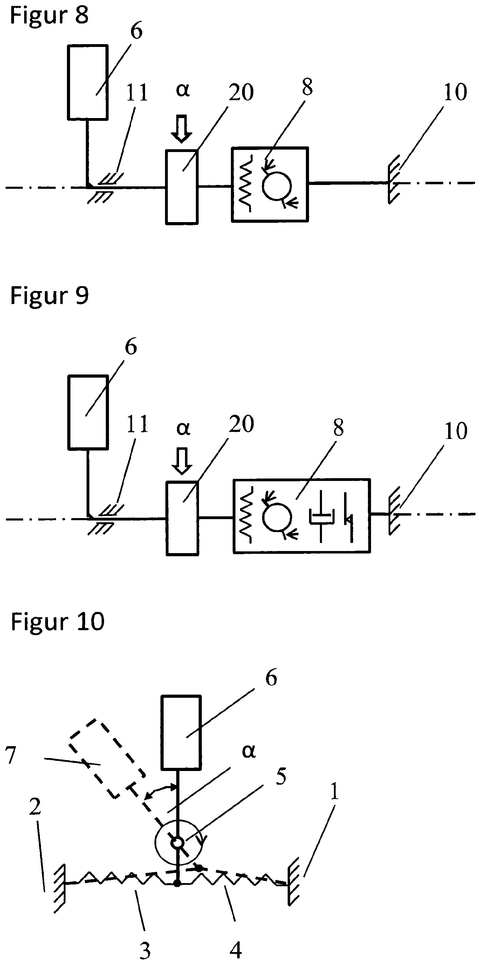

Figur 10 zeigt die klassische aus dem Stand der Technik bekannte Feder-Rückstellmechanik mit einem Joystick 6 in der Ausgangslage und in der Position, in der der Joystick um den Winkel α ausgelenkt wurde (Position 7). Der Joystick 6 ist um den Drehpunkt oder Drehachse 5 drehbar.

Die Bezugszeichen 3, 4 zeigen zwei Federelemente, die sich zu beiden Seiten des Joysticks erstrecken und diesen je nach Auslenkung in entgegengesetzten Richtungen mit einer Federkraft beaufschlagen. In dem dargestellten Ausführungsbeispiel wird der Joystick 6 gegen den Uhrzeigersinn verschwenkt, was zur Folge hat, dass die Feder 3 gedehnt und die Feder 4 gestaucht wird. Die Feder 3 übt somit eine Rückstellkraft auf dem Joystick aus, die zunimmt, je größer der Winkel der Auslenkung ist. Die Federn 3, 4 sind mit ihrem einen Ende an dem Joystick oder einem mit diesem verbundenen Gestänge angeordnet.

Die Bezugszeichen 1, 2 sind feste Lagerpunkte, an denen die Federn mit ihren anderen Enden festgelegt sind.

Figur 8 zeigt die Anordnung gemäß Figur 10 von der Seite, wobei in Figur 8 zusätzlich der Sensor 20 eingezeichnet ist, der die Auslenkung des Joysticks, d.h. den Winkel α misst. Das Bezugszeichen 8 kennzeichnet das beispielsweise aus zwei Federn bestehende Federpaket ggf. mit einem Dämpfungselement und das Bezugszeichen 10, 11 Lagerstellen für die Joystickstange, die bei der Auslenkung des Joysticks eine Drehbewegung erfährt.

Figur 9 verdeutlicht eine zu Figur 8 ähnliche Ausführung. Diese unterscheidet sich von der Ausführung nach Figur 8 dadurch, dass mit dem Bezugszeichen 8 außer dem Federpaket und einem Dämpfungselement auch ein Reibelement gekennzeichnet ist

Darüber hinaus beschreibt das Dokument US20100302017A1 eine Arbeitsmaschine mit einer herkömmlichen Anordnung zum Steuern der Arbeitsmaschine.

Der vorliegenden Erfindung liegt die Aufgabe zugrunde, eine Arbeitsmaschine mit einer Anordnung der eingangs genannten Art dahingehend weiterzubilden, dass die oben genannten ungleichförmigen Bewegungen am Handsteuergerät vermieden werden können, so dass ungewollte Effekte auf das Steuerungsverhalten der Antriebe unterbleiben.

Diese Aufgabe wird durch eine Anordnung mit den Merkmalen des Anspruchs 1 gelöst.

Danach ist vorgesehen, dass die Anordnung wenigstens eine Verstelleinrichtung aufweist, die auf das Federpaket derart einwirkt, dass mittels der Verstelleinrichtung eine Verlagerung der Mittelstellung des Federpakets durchführbar ist. Erfindungsgemäß wird somit die aus dem Stand der Technik bekannte Feder-Rückstellmechanik beibehalten, jedoch lässt sich durch die Verlagerung des Federpakets eine Verlagerung des Nullpunktes der Federkennlinie innerhalb des Sensormessbereichs erzielen.

An dieser Stelle wird darauf hingewiesen, dass der Begriff "Federpaket" allgemein zu verstehen ist und jede Anordnung mit genau einer Feder, mit zwei oder mit mehr als zwei Federn aufweist sowie Anordnungen, die zusätzlich zu der wenigstens einen Feder ein oder mehrere weitere Elemente, wie Dämpfer oder Reibungselemente aufweist.

Unter der "Mittelstellung des Federpakets" wird die Stellung des Federpaktes verstanden, bei der die Federkennlinie durch den Nullpunkt geht, d.h. sich das Handsteuergerät in einer "Neutralstellung" befindet, in der es keine resultierende Rückstellkraft durch das Federpaket erfährt.

In einer bevorzugten Ausgestaltung der Erfindung ist vorgesehen, dass sich zwischen dem Federpaket und der Verstelleinrichtung wenigstens ein selbsthemmendes Getriebe befindet, das vorzugsweise als Schneckengetriebe ausgebildet ist.

Die Verstelleinrichtung ist derart ausgebildet, dass die Führungsgröße für die Verlagerung der Mittelstellung des Federpakets durch die Lageänderung wenigstens eines durch den Lenkaktuator der Arbeitsmaschine bewegten Teils oder durch die Lageänderung des wenigstens einen Lenkaktuators selbst gebildet wird.

Bei dem Teil handelt sich um die Lenkgeometrie.

Die zur Verlagerung des Federpaketes dienende Verstelleinrichtung kann aktiv oder passiv ausgeführt sein. Unter einer aktiven Verstelleinrichtung ist eine Verstelleinrichtung mit wenigstens einem Antriebselement zu verstehen. Bei einer passiven Verstelleinrichtung fehlt ein solches Antriebselement, vielmehr wird dort die Verlagerung des Federpaketes durch den Nutzer selbst, d.h. durch die Bewegung des Handsteuergerätes hervorgerufen.

Bei dem Handsteuergerät kann es sich beispielsweise um ein Lenkrad, einen Joystick, einen Hebel oder ein sonstiges beliebiges durch einen Nutzer zu betätigendes Steuerelement handeln. Dieses kann genutzt werden, um eine beliebige Funktionalität, wie z.B. die Bewegung einer Arbeitsausrüstung, z.B. einer Schaufel, die Lenkung oder andere Elemente der Arbeitsmaschine zu steuern oder zu regeln.

Wie ausgeführt kann die Verstelleinrichtung passiv ausgeführt sein, wobei die Verlagerung der Mittelstellung des Federpakets durch die manuelle Betätigung des Handsteuergerätes erfolgt. In diesem Falle wird das Federpaket durch die manuelle Betätigung des Handsteuergerätes, d.h. durch den Bediener "mitgenommen".

Auch ist es denkbar, dass die Verstelleinrichtung aktiv ausgeführt ist, wobei die Verlagerung der Mittelstellung durch wenigstens einen Stellantrieb, insbesondere durch wenigstens einen Motor, wie beispielsweise wenigstens einen Elektromotor ggf. mit Getriebe erfolgt.

Der Stellantrieb kann ausgebildet sein, das Federpaket in der verlagerten Position zu fixieren, was den Vorteil mit sich bringt, dass kein separates Bremselement notwendig ist, um das Federpaket in seiner verlagerten Stellung zu halten.

Die Anordnung kann wenigstens eine Bremse, insbesondere um eine Magnetpulverbremse, und/oder wenigstens eine Kupplung aufweisen, die ausgebildet ist, das Federpaket in der verlagerten Position zu fixieren. Somit kann das Federpaket bei Erreichen der neuen Ziel-Mittelstellung durch eine Kupplung oder Bremse festgehalten werden.

Im Falle der Verwendung eines Antriebs kann der Antrieb das Federpaket in der Ziel-Mittelstellung festhalten. Der Antrieb kann das Federpaket auch ohne Einwirken des Bedieners selbstständig verschieben.

Vorzugsweise ist mindestens ein Sensor vorhanden, der die Stellung des Handsteuergerätes oder einen darauf basierenden Wert erfasst, wie beispielsweise die Auslenkung eines Joysticks oder den Drehwinkel eines Lenkrades.

Die Federwege des Federpakets können den gesamten Messbereich des Sensors umfassen oder die Federwege des Federpakets können durch einen oder mehrere Anschläge begrenzt sein, wobei die Anschläge vorzugsweise so gewählt sind, dass die Auslenkung des Handsteuergerätes ausgehend von der Mittelstellung symmetrisch zu beiden Anschlägen hin möglich ist, jedoch ist auch eine asymmetrische Ausführung denkbar und mit umfasst.

Wie oben ausgeführt, kann das Federpaket eine oder mehrere Federn und optional einen oder mehrere Dämpfer und/oder ein oder mehrere Reibungselemente aufweisen.

Grundsätzlich ist die Lenkfähigkeit der Arbeitsmaschine auch dann gewährleistet, wenn eine fehlerhafte Betätigung der Verstelleinrichtung und somit eine fehlerhafte Nachführung des Federpakets vorliegt. Dies ist darauf zurückzuführen, dass auch ohne Nachführung bzw. bei fälschlich arretierter Nachführung der jeweilige Federweg z.B. durch Betätigung des Joysticks durchfahren werden kann. Somit ist eine Lenkung in beide Richtungen möglich.

Um sicherzustellen, dass dies auch dann gilt, wenn die Nachführung des Federpakets den maximalen Verstellweg durchlaufen hat, ist gemäß einer weiteren Ausgestaltung der Erfindung vorgesehen, dass die Verstellmittel derart ausgebildet sind, dass das Federpaket derart ausgeführt ist, dass bei Einnehmen einer Maximalstellung des Federpakets bzw. dessen Verstelleinrichtung eine darüber hinausgehende Auslenkung des Handsteuergerätes durch den Nutzer der Arbeitsmaschine möglich ist.

So ist auch an einer Maximalposition des Federpakets bzw. dessen Verstelleinrichtung eine Vornahme von Lenkbewegungen in beide Richtungen, d.h. nach rechts und links möglich, d.h. die Lenkbarkeit der Arbeitsmaschine bleibt erhalten, auch wenn das Federpaket bzw. dessen Verstelleinrichtung fehlerhaft eine maximale Position eingenommen hat und dort ggf. verharrt. Dies wird durch einen Vorhaltewinkel erreicht, d.h. durch die Möglichkeit, das Handsteuergerät um das Maß der Federauslenkung über diese Maximalposition der Verstelleinrichtung des Federpakets hinaus auszulenken.

Dabei ist es denkbar, dass die Auslenkung des Handsteuergerätes in einer Maximalstellung des Federpakets bzw. dessen Verstelleinrichtung relativ zu dessen Mittelstellung symmetrisch ist. In diesem Fall ist das Handsteuergerät und somit die Lenkung im gleichen Umfang in beide Richtungen auslenkbar bzw. betätigbar.

Denkbar ist es jedoch auch, dass das Federpaket derart ausgebildet ist, dass die Auslenkung des Handsteuergerätes in einer Maximalstellung des Federpakets relativ zu dessen Mittelstellung asymmetrisch ist, wobei diese Restauslenkung über die Maximalstellung hinaus geringer ist als in der Gegenrichtung. So kann der Restfederweg, der im störungsfreien Betrieb keine Lenkbewegung zur Folge hätte, gering gehalten werden.

Vorzugsweise ist die Anordnung derart ausgebildet, dass die Auslenkung des Handsteuergerätes ausschließlich innerhalb eines Sensorbereichs der Anordnung möglich ist.

Ist die Nachführung des Federpakets fehlerhaft, indem sich diese beispielsweise verselbständigt, ist vorzugsweise vorgesehen, dass sich bei dieser Bewegung der Nachführung keine Änderung der Auslenkung bzw. keine Verstellung des Handsteuergerätes bzw. Auslenkung des Federpakets ergibt, so dass eine Lenkbewegung der Arbeitsmaschine unterbleibt.

Diese Anordnung kann beispielsweise zum Steuern oder Lenkung oder auch zur Steuerung des Arbeitswerkzeuges dienen.

Weitere Einzelheiten und Vorteile der Erfindung werden anhand eines in der Zeichnung dargestellten Ausführungsbeispiels näher erläutert. Es zeigen:
- Figur 1:: eine schematische Ansicht der Anordnung gemäß der Erfindung mit Kupplung;
- Figur 2:: eine schematische Ansicht der Anordnung gemäß der Erfindung mit Bremse,
- Figur 3:: eine schematische Ansicht der Anordnung gemäß der Erfindung mit Antrieb,
- Figur 4, 5:: Federkennlinien vor und nach Verschiebung des Federpakets
- Figur 6, 7:: Federkennlinien bei Ausbleiben der Nachführung mit symmetrischem und asymmetrischem Federweg und
- Figur 8-10:: schematische Ansichten von Anordnungen aus dem Stand der Technik.

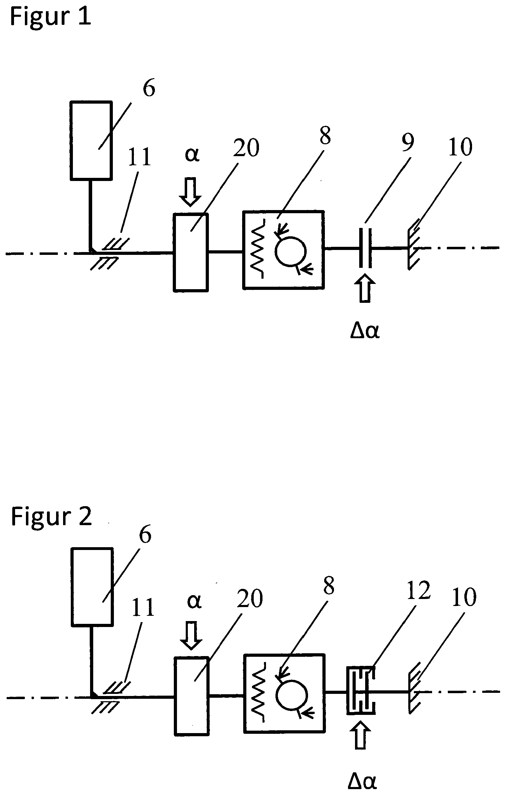

In den Figuren 1 bis 3 sind gleiche oder funktionsgleiche Teile mit denselben Bezugszeichen versehen wie in den Figuren 8 bis 10.

Wie dies aus Figur 1 hervorgeht, befindet sich zwischen dem Lagerpunkt 10 und dem Federpaket 8 eine Kupplung 9.

Diese Kupplung ist bei der Verschiebung des Federpakets 8 durch den Nutzer offen. Hat das Federpaket seine Sollposition eingenommen, wird die Kupplung 9 geschlossen, so dass das Federpaket 8 in der neuen Ziel-Mittelstellung fixiert wird.

Figur 2 zeigt eine Figur 1 entsprechende Anordnung mit dem einzigen Unterschied, dass die Kupplung 9 durch eine Bremse 12 ersetzt ist. Die Funktion ist dieselbe wie bei der Kupplung insoweit, dass die Bremse 12 während der Verlagerung des Federpakets 8 offen ist und bei Erreichen der neuen Ziel-Mittelstellung geschlossen wird.

Der Aufbau nach Figur 2 kann auch über 2 Bremsen verfügen, separat für jede Richtung, mit jeweils einem Freilauf versehen, sodass die einzelne Bremse jeweils nur in eine Richtung wirken kann.

Bei der Bremse 12 kann es sich beispielsweise um eine Magnetpulverbremse handeln.

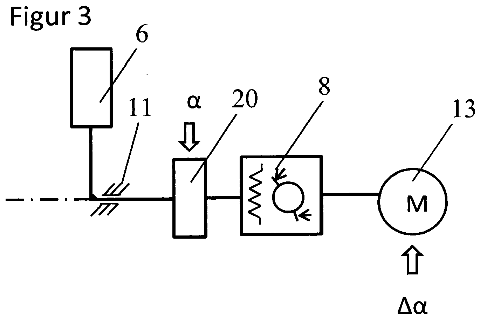

Figur 3 zeigt eine weitere erfindungsgemäße Ausführung. Bei dieser ist die Verlagerung des Federpakets 8 nicht passiv, d.h. erfolgt nicht durch die manuelle Betätigung durch den Nutzer, sondern mittels des Motors 13. Dieser ist gleichzeitig auch so ausgeführt, dass er das Federpaket 8 in der neuen Ziel-Mittelstellung hält, so dass - wie aus Figur 3 ersichtlich - keine Brems- oder Kupplungselemente erforderlich sind. Der Motor 13 kann ein Elektromotor sein, der über ein Getriebe die Verlagerungsbewegung des Federpakets 8 vornimmt.

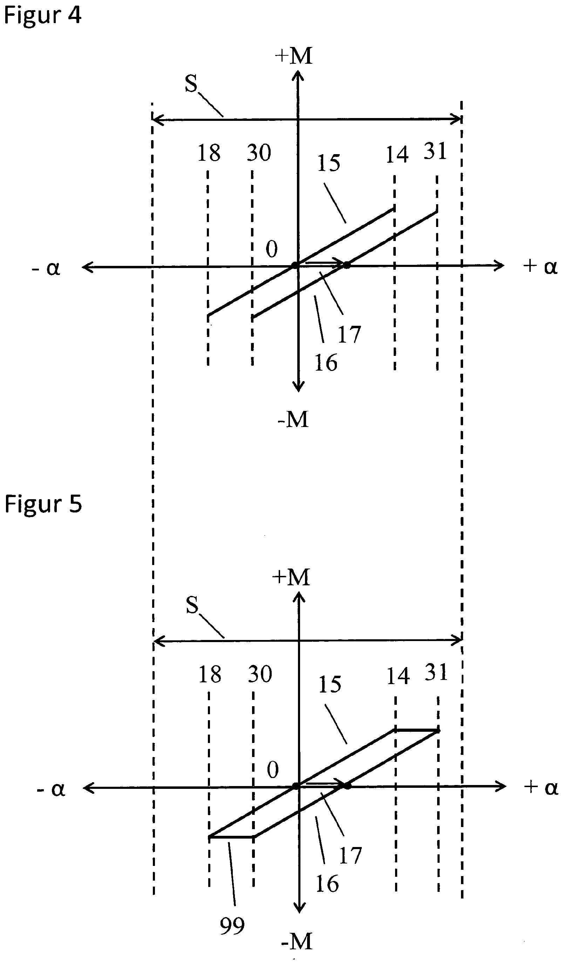

Figur 4 und 5 zeigt auf der Ordinate das Rückstellmoment, dass durch das Federpaket auf das Handsteuergerätes aufgebracht wird und auf der Abszisse die Auslenkung bzw. den Drehwinkel etc. α des Handsteuergerätes. Die Linien 15 kennzeichnen die Feder-/Dämpfungskennlinie bei nicht verlagertem Federpaket. In diesem Fall geht die Federkennlinie durch den Nullpunkt des Koordinatensystems, d.h. bei nicht vorhandener Auslenkung (α = 0) wirkt auf das Handsteuergerät keine Rückstellkraft. Die Federn des Federpaketes sind so ausgeführt, dass bei einer Auslenkung in beide Richtungen eine Rückstellkraft wirkt, wie dies der Linie 15 entnommen werden kann. Die Bezugszeichen 14 und 18 kennzeichnen die Anschläge der Wegauslenkung des Federpaketes. Dabei sind die Anschläge vorzugsweise so gewählt, dass die Auslenkung des Handsteuergerätes symmetrisch um die jeweilige Mittelstellung bzw. Nullpunkt durch das Federpaket eingeschränkt wird.

Grundsätzlich ist von der Erfindung jedoch auch umfasst, dass die Federwege dem gesamten Sensorik-Messbereich entsprechen, der in Figur 4 und 5 mit dem Bezugszeichen S angegeben ist.

Wird das Federpaket verschoben, ergibt sich eine neue Federkennlinie, die in Figur 4 und 5 exemplarisch mit dem Bezugszeichen 16 gekennzeichnet ist. Die Kennlinienverschiebung ist durch das Bezugszeichen 17 angegeben. Die neue Kennlinie 16 verläuft wieder durch den Nullpunkt, allerdings nicht bei einer Nullauslenkung des Handsteuergerätes, sondern bei einer bereits vorgenommenen Auslenkung α'. Bei dieser Auslenkung α' ist die resultierende Rückstellkraft auf das Handsteuergerät Null. Eine Rückstellkraft ergibt sich erst, wenn das Handsteuergerät aus dieser neuen Stellung ausgelenkt wird.

Nach der Verschiebung des Federpaketes ergeben sich neue Anschläge 30 und 31.

Das Bezugszeichen 99 gekennzeichnet einen momementenkonstanten Bereich.

Das Federpaket kann wie ausgeführt aus einer oder mehreren Federn bestehen. Es ist vorzugsweise derart ausgebildet, dass in beiden bzw. allen Betätigungsrichtungen des Handsteuergerätes eine Rückstellkraft erzeugt wird.

Das Federpaket kann außer der oder den Federn auch ein oder mehrere Dämpfungs- oder Reibungselemente aufweisen.

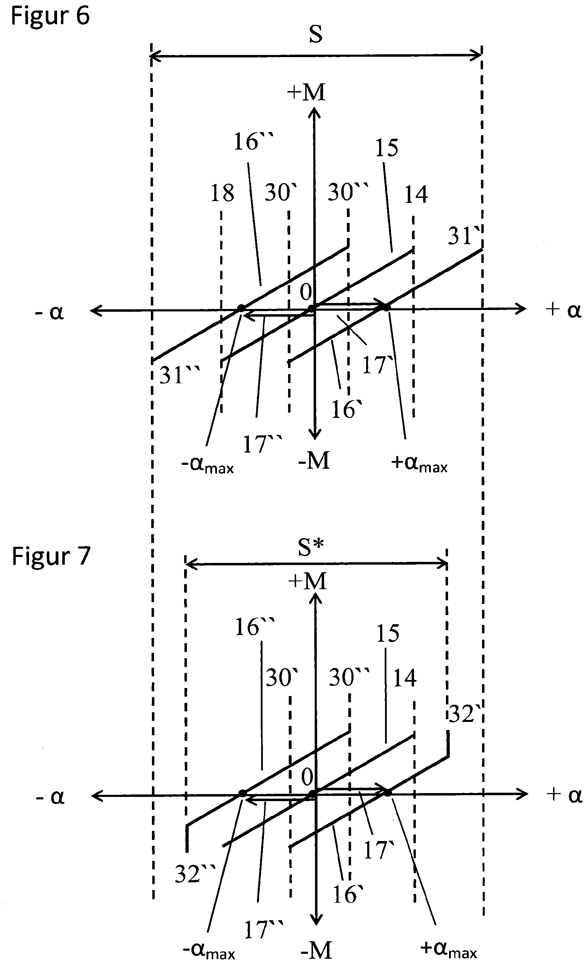

Figur 6 zeigt eine Federkennlinie mit einem Vorhaltewinkel für das Handsteuergerät, wenn das Federpaket eine Maximalposition +αmax oder -αmax einnimmt.

Hinsichtlich der Kennlinie 15 sowie der Grenzwerte 14 und 18 wird auf die Figuren 4 und 5 verwiesen.

Kommt es nun zu einer fehlerhaften Betätigung des Antriebs des Federpakets oder zu einer sonstigen fehlerhaften Verstellung des Federpakets auf die Maximalpositionen +αmax oder -αmax und verharrt das Federpaket dort, muss die Lenkfähigkeit der Arbeitsmaschine aufrecht erhalten werden. Um auch bei diesen Maximalpositionen αmax oder -αmax eine Lenkbewegung in beide Richtungen ± a zu ermöglichen, wird in dieser Ausführungsform ein Vorhaltewinkel geschaffen, d.h. die Möglichkeit, das Handsteuergerät, wie z.B. einen Joystick über diese Maximalposition hinaus auszulenken. Es ist somit eine Auslenkung über das die Nachführung des Federpakets beschränkende Maß +amax oder -αmax hinaus möglich. Der Vorhaltewinkel erlaubt somit eine Auslenkung des Bedienhebels oder eines sonstigen Handsteuergerätes (und damit eine Lenkbewegung) um das Maß der Federauslenkung des Federpakets über die Maximalpositionen +amax oder -amax des Verstellbereichs des Federpakets bzw. von dessen Antrieb hinaus.

Dabei zeigt Figur 6 eine Ausführung, welche eine beiderseitige vollständige Federauslenkung gegen das Moment M gemäß der Verläufe 16' und 16" an den beiden Endanschlägen +αmax und -αmax der Nachführung ermöglicht. Die Grenzwerte des Verstellbereiches sind 30' und 31' bzw. 30" und 31". Die Verschiebung des Federpakets ist mit 17' bzw. mit 17" gekennzeichnet.

Bei dieser Ausführungsform kann es störend wirken, dass beim regulären, d.h. störungsfreien Erreichen der Endanschläge +amax oder -amax im störungsfreien Betrieb und dem korrespondierenden Erreichen der maximalen Lenkbewegungen am Fahrzeug ein Restfederweg von +amax oder -amax bis 31' und 31" verbleibt, dessen Überfahren im störungsfreien Betrieb zu keiner weiteren Lenkbewegung am Fahrzeug führt.

Als Vorteil ist zu nennen, dass die Federauslenkung bzw. der Vorhaltewinkel, d.h. die Auslenkung des Handsteuergerätes von +αmax zu 31 'oder -αmax zu 31" im Störbetrieb der Nachführung des Federpakets innerhalb des Sensor-Messbereichs S symmetrisch ist.

In Figur 7 ist eine weitere Ausführungsvariante beschrieben, bei der die Federauslenkung und Vorhaltewinkel zur Aufrechterhaltung der Lenkfähigkeit im Störbetrieb an beiden Endanschlägen +amax und -amax auf die Maße 32' und 32" begrenzt ist.

Der zu installierende Sensorbereich wird so auf das Maß S* reduziert. Im Übrigen entspricht das Ausführungsbeispiel dem gemäß Figur 6.

Die Variante gemäß Figur 7 hat den Vorteil, dass der Restfederweg von +amax bzw. -amax bis 32' bis 32" kleiner ist als von +αmax bzw. -αmax bis zum jeweils anderen Grenzwert 30' bzw. 30", so dass die Auslenkungen des Handsteuergerätes, die im störungsfreien Betrieb keine Lenkbewegung mehr zur Folge haben, gering gehalten werden können.

Als Nachteil ist zu nennen, dass der Nutzer der Arbeitsmaschine im Störbetrieb mit einer asymmetrischen Betätigungscharakteristik zurecht kommen muss, da das Ausmaß der möglichen Betätigung des Handsteuergerätes in beiden Richtungen nicht gleich groß ist.

Bei dem Handsteuergerät kann es sich beispielsweise um einen Joystick, einen Bedienhebel, ein Lenkrad etc. handeln.

Insgesamt wird durch die Erfindung vorzugsweise ein System mit Nullpunktsverschiebung der Federkennlinie bereitgestellt, wobei die Nullpunktsverschiebung durch ein Nachführen der Federpakete bzw. des Handsteuergerätes um das Maß Δα gekennzeichnet ist. Dieses Nachführen erfolgt vorzugsweise in Abhängigkeit einer zugeordneten Aktuatorposition, wobei der Aktuator vorzugsweise zur Verstellung des Lenkwinkels der Arbeitsmaschine dient.

### Bezugszeichenliste:

- 1: Lagerpunkt 1
- 2: Lagerpunkt 2
- 3: Federelement 1
- 4: Federelement 2
- 5: Drehpunkt
- 6: Handsteuergerät bspw. Joystick in Ausgangslage
- 7: Handsteuergerät bspw. Joystick ausgelenkt
- 8: Feder/Dämpfungselement
- 9: Kupplung
- 10: Lagerpunkt 3
- 11: Lagerpunkt 4
- 12: Bremse
- 13: Motor
- 14: Anschlag 1 erste Stellung
- 15: Feder/Dämpfungskennlinie 1
- 16: Feder/Dämpfungskennlinie 2
- 16': Feder/Dämpfungskennlinie 2
- 16": Feder/Dämpfungskennlinie 2
- 17: Kennlinienverschiebung
- 17': Kennlinienverschiebung
- 17": Kennlinienverschiebung
- 18: Anschlag 2 erste Stellung
- 20: Sensor
- 30: Anschlag 2 zweite Stellung
- 30': Anschlag 2 dritte und fünfte Stellung
- 30": Anschlag 1 vierte und sechste Stellung
- 31: Anschlag 1 zweite Stellung
- 31': Anschlag 1 dritte Stellung
- 31": Anschlag 2 vierte Stellung
- 32': Anschlag 1 fünfte Stellung
- 32": Anschlag 2 sechste Stellung
- α: Auslenkungswinkel Federpaket
- α': Winkel
- Δα: Nullpunktverschiebung des Federpakets innerhalb S
- +αmax, -αmax:: maximale Auslenkung des Federpakets
- M: Motor
- +M: Moment
- -M: Moment
- S: Sensorbereich
- S*: Sensorbereich
- 99: Momentenkonstanter Bereich

## Patentansprüche

1. Arbeitsmaschine, insbesondere Radlader, mit wenigstens einer Anordnung zum Steuern der Arbeitsmaschine, mit wenigstens einem Handsteuergerät, insbesondere Joystick oder Lenkrad, mit wenigstens einer Rückstellungseinrichtung in Form eines oder mehrerer Federpakete, die mit dem Handsteuergerät derart in Verbindung steht, dass durch das Federpaket (8) eine Rückstellkraft auf das Handsteuergerät (6) ausgeübt wird, wenn sich das Federpaket (8) nicht in seiner Mittelstellung befindet, wobei die Anordnung wenigstens eine Verstelleinrichtung aufweist, die auf das Federpaket (8) derart einwirkt, dass mittels der Verstelleinrichtung eine Verlagerung der Mittelstellung des Federpakets durchführbar ist, **dadurch gekennzeichnet, dass** die Verstelleinrichtung derart ausgebildet ist, dass die Führungsgröße für die Verlagerung der Mittelstellung des Federpakets (8) durch die Lageänderung wenigstens eines durch den Lenkaktuator der Arbeitsmaschine bewegten Teils der Arbeitsmaschine oder durch die Lageänderung des wenigstens einen Lenkaktuators der Arbeitsmaschine selbst gebildet wird, wobei es sich bei dem Teil um die Lenkgeometrie der Arbeitsmaschine handelt.

2. Arbeitsmaschine nach Anspruch 1, **dadurch gekennzeichnet, dass** sich zwischen dem Federpaket und der Verstelleinrichtung wenigstens ein selbsthemmendes Getriebe befindet, das vorzugsweise als Schneckengetriebe ausgebildet ist.

3. Arbeitsmaschine nach einem der vorhergehenden Ansprüche, **dadurch gekennzeichnet, dass** die Verstelleinrichtung aktiv oder passiv ausgeführt ist.

4. Arbeitsmaschine nach einem der vorhergehenden Ansprüche, **dadurch gekennzeichnet, dass** die Verstelleinrichtung passiv ausgeführt ist, wobei die Verlagerung der Mittelstellung des Federpakets (8) durch die manuelle Betätigung des Handsteuergerätes erfolgt.

5. Arbeitsmaschine nach einem der vorhergehenden Ansprüche, **dadurch gekennzeichnet, dass** die Verstelleinrichtung aktiv ausgeführt ist, wobei die Verlagerung der Mittelstellung durch wenigstens einen Stellantrieb, insbesondere durch wenigstens einen Motor und vorzugsweise durch wenigstens einen Elektromotor erfolgt.

6. Arbeitsmaschine nach Anspruch 5, **dadurch gekennzeichnet, dass** der Stellantrieb ausgebildet ist, das Federpaket (8) in der verlagerten Position zu fixieren.

7. Arbeitsmaschine nach einem der vorhergehenden Ansprüche, **dadurch gekennzeichnet, dass** die Anordnung wenigstens eine Bremse, insbesondere um eine Magnetpulverbremse, und/oder wenigstens eine Kupplung aufweist, die ausgebildet ist, das Federpaket (8) in der verlagerten Position zu fixieren.

8. Arbeitsmaschine nach einem der vorhergehenden Ansprüche, **dadurch gekennzeichnet, dass** zumindest ein Sensor vorhanden ist, der die Stellung des Handsteuergerätes (6) oder einen darauf basierenden Wert erfasst.

9. Arbeitsmaschine nach Anspruch 8 sowie nach einem der Ansprüche 1 bis 7, **dadurch gekennzeichnet, dass** die Federwege des Federpakets den gesamten Messbereich des Sensors oder nur einen Teil davon umfassen oder dass die Federwege des Federpakets (8) mit einem oder mehreren Anschlägen versehen sind, wobei die Anschläge vorzugsweise so gewählt sind, dass die Auslenkung des Handsteuergerätes (6) ausgehend von der Mittelstellung symmetrisch zu beiden Anschlägen möglich ist.

10. Arbeitsmaschine nach einem der vorhergehenden Ansprüche, **dadurch gekennzeichnet, dass** das Federpaket (8) eine oder mehrere Federn und optional einen oder mehrere Dämpfer und/oder Reibungselemente aufweist.

11. Arbeitsmaschine nach einem der vorhergehenden Ansprüche, **dadurch gekennzeichnet, dass** die Verstellmittel derart ausgebildet sind, dass die Verlagerung der Mittelstellung des Federpakets (8) bis zu wenigstens einer Maximalstellung möglich ist und dass das Federpaket (8) derart ausgebildet ist, dass bei Erreichen einer Maximalstellung des Federpakets (8) eine darüber hinausgehende Verstellung des Handsteuergerätes (6) durch den Nutzer der Arbeitsmaschine möglich ist.

12. Arbeitsmaschine nach Anspruch 11, **dadurch gekennzeichnet, dass** das Federpaket derart ausgebildet ist, dass die Verstellung des Handsteuergerätes bei Erreichen einer Maximalstellung des Federpakets (8) relativ zu dessen Mittelstellung symmetrisch ist.

13. Arbeitsmaschine nach Anspruch 11, **dadurch gekennzeichnet, dass** das Federpaket derart ausgebildet ist, dass die Verstellung des Handsteuergerätes bei Erreichen einer Maximalstellung des Federpakets (8) relativ zu dessen Mittelstellung asymmetrisch ist, wobei der Verstellweg über die Maximalstellung hinaus geringer ist als in der Gegenrichtung.

14. Arbeitsmaschine nach einem der Ansprüche 11 bis 13, **dadurch gekennzeichnet, dass** die Anordnung derart ausgebildet ist, dass die Verstellung des Handsteuergerätes (6) ausschließlich innerhalb eines Sensorbereichs der Anordnung möglich ist.

## Claims

1. A work machine, in particular a wheeled loader, having at least one arrangement for controlling the work machine, having at least one manual control device, in particular a joystick or a steering wheel, having at least one restoring device in the form of one or more spring assemblies that is connected to the manual control device such that a restoring force is exerted on the manual control device (6) by the spring assembly (8) when the spring assembly (8) is not in its central position, wherein the arrangement has at least one adjustment device that acts on the spring assembly (8) such that a shifting of the central position of the spring assembly can be carried out by means of the adjustment device,
**characterized in that**
the adjustment device is configured such that the reference value for the shifting of the central position of the spring assembly (8) is formed by the locational change of at least one part of the work machine moved by the steering actuator of the work machine or by the locational change of the at least one steering actuator of the work machine itself, with the part being the steering geometry of the work machine.

2. A work machine in accordance with claim 1, **characterized in that** at least one self-inhibiting transmission that is preferably configured as a worm transmission is located between the spring assembly and the adjustment device.

3. A work machine in accordance with one of the preceding claims, **characterized in that** the adjustment device is active or passive.

4. A work machine in accordance with one of the preceding claims, **characterized in that** the adjustment device is passive, with the shifting of the central position of the spring assembly (8) taking place by the manual actuation of the manual control device.

5. A work machine in accordance with one of the preceding claims, **characterized in that** the adjustment device is active, with the shifting of the central position taking place by at least one adjustment drive, in particular by at least one motor, and preferably by at least one electric motor.

6. A work machine in accordance with claim 5, **characterized in that** the adjustment drive is configured to fix the spring assembly (8) in the shifted position.

7. A work machine in accordance with one of the preceding claims, **characterized in that** the arrangement has at least one brake, in particular a magnetic powder brake, and/or at least one coupling that is configured to fix the spring assembly (8) in the shifted position.

8. A work machine in accordance with one of the preceding claims, **characterized in that** at least one sensor is present that detects the position of the manual control device (6) or a value based thereon.

9. A work machine in accordance with claim 8 and in accordance with one of the claims 1 to 7 **characterized in that** the deflections of the spring assembly comprise the total measurement range of the sensor or only a part thereof; or **in that** the deflections of the spring assembly (8) are provided with one or more abutments, with the abutments preferably being selected such that the travel of the manual control device (6) is possible symmetrical to both abutments, starting from the central position.

10. A work machine in accordance with one of the preceding claims, **characterized in that** the spring assembly (8) has one or more springs and optionally one or more dampers and/or friction elements.

11. A work machine in accordance with one of the preceding claims, **characterized in that** the adjustment means are configured such that the shifting of the central position of the spring assembly (8) is possible up to at least one maximum position; and **in that** the spring assembly (8) is configured such that on a reaching of a maximum position of the spring assembly (8), an adjustment of the manual control device (6) beyond it is possible by the user of the work machine.

12. A work machine in accordance with claim 11, **characterized in that** the spring assembly is configured such that the adjustment of the manual control device on reaching a maximum position of the spring assembly (8) is symmetrical relative to its central position.

13. A work machine in accordance with claim 11, **characterized in that** the spring assembly is configured such that the adjustment of the manual control device on a reaching of a maximum position of the spring assembly (8) is asymmetrical relative to its central position, with the adjustment path beyond the maximum position being smaller than in the opposite direction.

14. A work machine in accordance with one of the claims 11 to 13, **characterized in that** the arrangement is configured such that the adjustment of the manual control device (6) is only possible within a sensor range of the arrangement.

## Revendications

1. Engin de travail, en particulier chargeur sur pneus, comprenant au moins un système de commande de l'engin de travail, comprenant au moins un appareil de commande à main, en particulier une manette ou un volant, doté d'au moins un dispositif de rappel sous la forme d'un ou de plusieurs blocs ressorts, qui est en liaison avec l'appareil de commande à main de telle manière qu'une force de rappel est exercée sur l'appareil de commande à main (6) par le bloc ressort (8) quand le bloc ressort (8) ne se trouve pas dans sa position médiane,
le système comportant au moins un dispositif de déplacement, qui agit sur le bloc ressort (8) de telle manière qu'un décalage de la position médiane du bloc ressort peut être effectué au moyen du dispositif de déplacement,
**caractérisé en ce que**
le dispositif de déplacement est conçu de telle manière que la grandeur de référence pour le décalage de la position médiane du bloc ressort (8) est formée par la modification de la position d'au moins un élément de l'engin de travail déplacé par l'actionneur de guidage de l'engin de travail ou par la modification de la position de l'au moins un actionneur de guidage même de l'engin de travail, l'élément étant la géométrie de direction de l'engin de travail.

2. Engin de travail selon la revendication 1, **caractérisé en ce qu'**au moins un engrenage autobloquant, qui est réalisé de préférence sous la forme d'un engrenage à vis sans fin, se trouve entre le bloc ressort et le dispositif de déplacement.

3. Engin de travail selon l'une des revendications précédentes, **caractérisé en ce que** le dispositif de déplacement est réalisé actif ou passif.

4. Engin de travail selon l'une des revendications précédentes, **caractérisé en ce que** le dispositif de déplacement est réalisé passif, le décalage de la position médiane du bloc ressort (8) étant effectué par l'actionnement manuel de l'appareil de commande à main.

5. Engin de travail selon l'une des revendications précédentes, **caractérisé en ce que** le dispositif de déplacement est réalisé actif, le décalage de la position médiane étant effectué par au moins un mécanisme d'actionnement, en particulier par au moins un moteur et de préférence par au moins un moteur électrique.

6. Engin de travail selon la revendication 5, **caractérisé en ce que** le mécanisme d'actionnement est conçu pour fixer le bloc ressort (8) dans la position décalée.

7. Engin de travail selon l'une des revendications précédentes, **caractérisé en ce que** le système comporte au moins un frein, en particulier un frein à poudre magnétique, et/ou au moins un accouplement, qui est conçu pour fixer le bloc ressort (8) dans la position décalée.

8. Engin de travail selon l'une des revendications précédentes, **caractérisé en ce qu'**au moins un capteur est présent, qui détecte la position de l'appareil de commande à main (6) ou une valeur dépendante de celle-ci.

9. Engin de travail selon la revendication 8 ainsi que l'une des revendications 1 à 7, **caractérisé en ce que** les courses de ressort du bloc ressort comprennent toute la plage de mesure du capteur ou seulement une partie de celle-ci ou **en ce que** les courses de ressort du bloc ressort (8) sont pourvues d'une ou plusieurs butées, les butées étant de préférence choisies de telle manière que la déviation de l'appareil de commande à main (6) est possible de manière symétrique vers les deux butées à partir de la position médiane.

10. Engin de travail selon l'une des revendications précédentes, **caractérisé en ce que** le bloc ressort (8) comporte un ou plusieurs ressorts et en option un ou plusieurs amortisseurs et/ou éléments de frottement.

11. Engin de travail selon l'une des revendications précédentes, **caractérisé en ce que** les moyens de déplacement sont conçus de telle manière que le décalage de la position médiane du bloc ressort (8) est possible jusqu'à au moins une position maximale et **en ce que** le bloc ressort (8) est conçu de telle manière que, lorsqu'une position maximale du bloc ressort (8) est atteinte, un déplacement de l'appareil de commande à main (6) allant au-delà ce celle-ci est possible par l'utilisateur de l'engin de travail.

12. Engin de travail selon la revendication 11, **caractérisé en ce que** le bloc ressort est conçu de telle manière que le déplacement de l'appareil de commande à main, lorsqu'une position maximale du bloc ressort (8) est atteinte, est symétrique par rapport à sa position médiane.

13. Engin de travail selon la revendication 11, **caractérisé en ce que** le bloc ressort est conçu de telle manière que le déplacement de l'appareil de commande à main, lorsqu'une position maximale du bloc ressort (8) est atteinte, est asymétrique par rapport à sa position médiane, la course de déplacement au-delà de la position maximale étant inférieure à celle dans le sens opposé.

14. Engin de travail selon l'une des revendications 11 à 13, **caractérisé en ce que** le système est conçu de telle manière que le déplacement de l'appareil de commande à main (6) est possible uniquement dans une plage de détection du système.
